# EUROPEAN PATENT SPECIFICATION

(11) **EP 1 331 786 B1**
(45) Date of publication and mention of the grant of the patent: **02.05.2007**
(21) Application number: 02002167.1
(22) Date of filing: 29.01.2002
(51) Int. Cl.: H04L 29/06, H04L 12/18

(54) **Method and device for providing a communication session**
Verfahren und Vorrichtung zur Aufstellung von Kommunikationssitzung
Procédé et dispositif pour réaliser une session de communication

(43) Date of publication of application: 30.07.2003
(60) Divisional application: 06002236.5
(73) Proprietor: Agere Systems Guardian Corporation, Orlando, Florida 32819 (US)
(72) Inventor: Chambers, Michael, 91056 Erlangen (DE); Pugliese, Pierluigi, 85591 Vaterstetten (DE)
(74) Representative: Kampfenkel, Klaus

(56) References cited:
- WO-A-00/69140
- WO-A-00/70898
- MMUSIC WG: HANDLEY ET AL: "draft-ietf-sip-rfc2543bis-00.ps - SIP: Session Initiation Protocol" INTERNET ENGINEERING TASK FORCE, XX, XX, 5 June 2000 (2000-06-05), pages 1-129, XP002164649
- WIRAL: "Overcoming the two major barriers to Wireless IM adoption: Interoperability and usability" -, [Online] 15 November 2001 (2001-11-15), pages 1-6, XP002202980 Retrieved from the Internet: <URL:http://www.wiral.com/w_2/formmanager/ downloads/files/WIMWhitePaper15november.pd f> [retrieved on 2002-06-20]
- WIRELESS VILLAGE: "Frequently Asked Questions" WIRELESS VILLAGE, [Online] 26 April 2001 (2001-04-26), pages 1-11, XP002202981 Retrieved from the Internet: <URL:http://www.wireless-village.org/wirel ess-village-faqs-v1.pdf> [retrieved on 2002-06-20]
- ROSENBERG J., SCHULZRINNE H.: "Models for Multi Party Conferencing in SIP" DRAFT-ROSENBERG-SIP-CONFERENCING-MODELS-01 , 20 July 2001 (2001-07-20), pages 1-26, XP015034694
- MILADINOVIC I., STADLER, J.: "SIP Extensions for Multiparty Conferencing" DRAFT-MILADINOVIC-SIP-MULTIPARTY-EXT-00.TX T, 6 February 2001 (2001-02-06), pages 1-14, XP015004409

## Description

### Field of the Invention

The invention relates to a method and device for providing a communication session in a communication system, in general, and for a communication session with a plurality of users, in particular.

### Background of the Invention

Telecommunication, in general, and digital mobile radio telecommunication, in particular, are of increasing interest for all types of text, speech or data transmission in today's information society.

Recently, exchanging of text messages has become very popular. User of global system for mobile communication (GSM) networks, in particular young people use the GSM short message service (SMS) very frequently to communicate with their peer group.

To send an SMS-message it is necessary to:
- select a respective menu item at a mobile phone,
- enter a text,
- enter a telephone number of a recipient and
- send the text with short message service.

On most mobile telephones, this procedure has to be repeated for each recipient, even though the same text is transmitted. Reading a received SMS-message requires a similarly long and complicated procedure.

Furthermore the user or subscriber can either read a received SMS-message or see his own text to be sent, but cannot see both or send and receive simultaneously. Therefore, a user who wants to send a response to a message received has to remember the received message's content.

In general, this type of text transmission functionality between mobile telephone users is relatively poor. Nevertheless, short message service is pretty expensive. Typical cost for transmitting an SMS-message is about 0.2 Euro.

Furthermore, an SMS-message is disadvantageously restricted to 160 characters.

Moreover, SMS-messages are routed via a server in the GSM-network or, more precisely, in the network backbone. The SMS-message is buffered or stored by the server before being transmitted to the recipient. This procedure considerably slows down the short message service.

Typically, the sender of the SMS-message does not receive a confirmation, whether his message was received or read by the recipient.

All this makes a correspondence via SMS disadvantageous for the users but also for the network operator, in particular when the correspondence includes several subsequent messages to be exchanged between the users. Those disadvantages are even more serious when more than two users try to communicate via SMS. A simultaneous exchange of text is not possible at all.

However, due to the exploding spreading of telecommunication users and hard competition between the network operators, particularly in the field of mobile communication there is an ever-increasing and nearly unappeasable demand for new and improved services.

From WO 00/69140 a system for establishing communication sessions utilizing the so called session initial protocol is described. However, this document merely relates to networks communicating via the Internet protocol. It is described to send invitations selected contacts from a list using the session initiation protocol. However, this system does not make use of the advantageous concept of the present invention.

Therefore, it is an object of the present invention to provide a method and device for providing a communication session with improved capabilities and avoiding the aforementioned disadvantages.

A further object of the invention is to provide a method and device which is suitable for a communication session with a plurality of users.

Still a further object of the invention is to provide a method and device which enables exchanging a large amount of data, e.g. text and/or images in a convenient, inexpensive and fast manner.

Still a further object of the invention is to provide a method and device which can be implemented in already existing communication systems, e.g. in GSM or UMTS networks.

A further object of the invention is to provide a method and device for providing a communication session wherein users with mobile and wirebound terminals can participate.

The object of the invention is achieved by subject matter of the independent claims in a surprisingly simple manner.

The invention is related to a method according to claim 1, a telecommunication terminal according to claim 21 and a telecommunication network according to claim 34.

Other preferred embodiments of the invention are set out in the dependent claims.

The communication session initiated or provided with the method according to the invention allows the users to exchange data, e.g. text or images in a simple and inexpensive manner. In particular, the data can be received and transmitted simultaneously. Furthermore a chat session in real time is enabled.

Advantageously the first user or initiator can be identified by the first address, which is preferably world-wide unique.

When using a telephone having a 10-button keyboard with multiple character occupancy, user convenience is largely improved when a word recognition software or method adapted to such a 10-button keyboard is provided.

The method and device according to the invention can easily be implemented in an existing communication system, e.g. a network according to the Global System for Mobile Communication (GSM) or the Universal Mobile Telecommunication System (UMTS).

Preferably, the reply of the second user or second terminal comprises a second address with which also the second user can be identified by others. The second address is preferably also world-wide unique.

The first address is a packet data protocol address, e.g. preferably an internet protocol (IP) address. In a preferred embodiment of the invention also the second address is a packet data protocol address, e.g. an internet protocol (IP) address. Preferably, the first and/or second address are requested at the communication system or network, more precisely at a stationary part, e.g. a server at the backbone of the network.

However, it is also possible that the first and/or second terminal already have an address, e.g. an IP-address. In this case that address can be used instead of requesting a new one. This can happen when a terminal is already online, e.g. using internet or wireless application protocol (WAP) services when the session should be started.

Preferably, the first address is requested by the first or initiator terminal before the initiation message is transmitted and the second address is requested by the second user before the first reply is transmitted or sent.

The initiation message is transmitted with a circuit switched service employing short message service (SMS).

Advantageously, the short message service is available at any time and can be used, even when the second user has switched off his terminal. In this case, the message will be stored by a server of the network back-bone and will be automatically transmitted to the second user, when the second terminal is switched on and logs on to the network.

In a preferred embodiment, the first reply is transmitted with a packet switched service, e.g. with general packet radio service (GPRS). Preferably, this transmission uses internet protocol or wireless application protocol, in particular, when the first address is an IP- or WAP-address.

In a further preferred embodiment the first terminal marks the second user or participant as being active, when the first reply is received and/or the session is activated at this time by the first terminal which acts as server for the session. Therefore, no server outside the user terminals (which would be e.g. a stationary server in the network backbone) is necessary to store messages or assign them to the active session participants once the session is active.

Furthermore, when the session is active the first, second and possibly further active terminals enable data input by the respective user. Data are preferably text or text messages, but can also be other data, in particular digital data, e.g. images and/or digitised sounds as well.

In a most preferred embodiment, more than the first and second user are participating the communication session. However, the first user is still the initiator of the session, such that the first terminal assigned to the first user is characterised as initiator terminal.

The second user is a member of a group comprising a plurality of users. The group comprises 2, 3, 4, 5, 6 or more users, each with a respective terminal assigned to him.

The first, second and further terminals can be mobile terminals or mobile stations, e.g. mobile phones and/or wirebound phones and/or computers. Advantageously, the plurality of user terminals can also comprise different terminals.

When the first user or initiator wants to start the communication session, he first selects one or more other users, together defining a selected group of users. Selection input in the first terminal comprises selecting one or more users from a phone book and/or manually typing one or more subscriber identifications or telephone numbers. When all chosen participants are selected, the initiation message, e.g. an SMS-message comprising at least the first address of the first user is sent to each member of the group. Each member receiving the initiation message is enabled to decide whether he wants to participate the offered communication session. If so, he requests an own address and sends a reply including his own address to the initiator. When receiving the reply the initiator terminal will automatically mark this replying user as active. With the first received reply also the session becomes automatically active.

Preferably, the communication system or at least a portion of it is a digital system comprising a global system for mobile communication (GSM) network or a universal mobile telecommunication system (UMTS) network, such that at least some of the participating mobile terminals are GSM- and/or UMTS-terminals or phones.

The invention is described in more detail and in view of preferred embodiments hereinafter. Reference is made to the attached drawings.

### Brief Description of the Figures

It is shown in
- Fig. 1: a portion of a system architecture of a communication system and

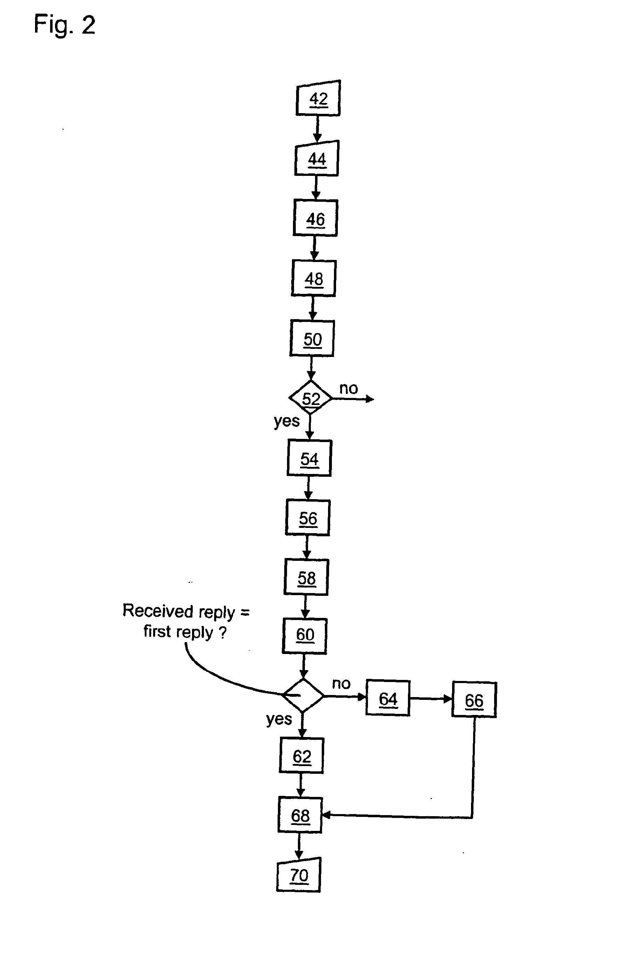

- Fig. 2: a flow chart of a course of actions from initiation to termination of a communication session according to a preferred embodiment of the invention.

### Detailed Description of the Invention

In the following various phases of a communication session according to the invention in form of a chat session is described. Preferably the methods steps take place in the order as described as follows.

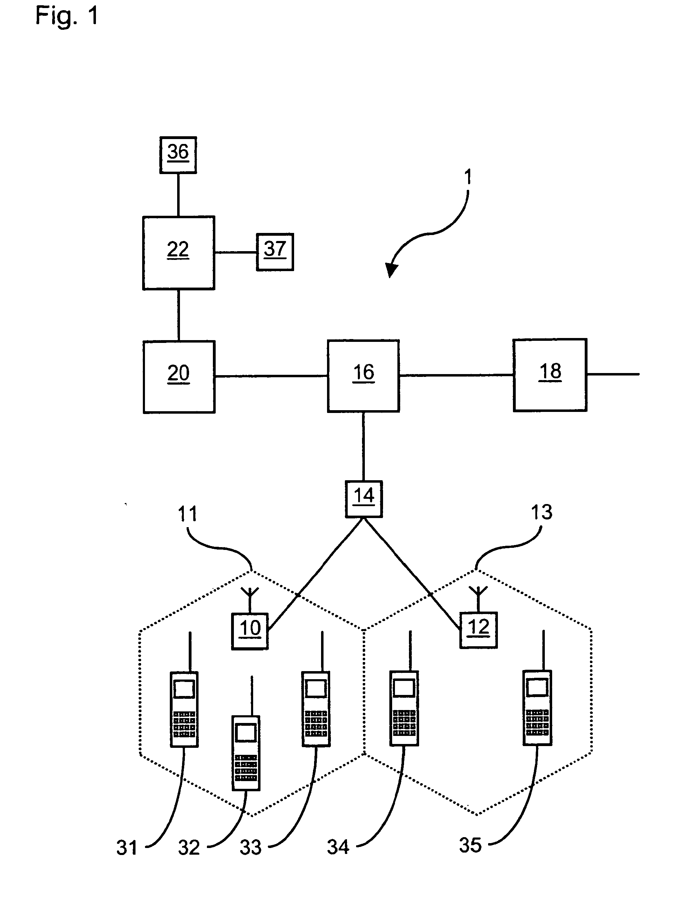

Fig. 1 shows a communication system or network 1 comprising two base transceiving stations 10, 12, a base station controller 14, a serving general packet radio service (GPRS) support node 16 two gateway GPRS support nodes 18, 20 and a gateway mobile switching centre (GMSC) 22. GPRS support node 18 connects the communication network to other mobile communication networks. It is clear to those skilled in the art that the aforementioned components are merely an exemplary portion of a real telecommunication network. A real network typically comprises a large plurality of each of those components.

Furthermore an initiator terminal or GSM or UMTS mobile phone 31 four further GSM or UMTS mobiles phones 32, 33, 34 and 35 are shown. Mobile phones 31, 32 and 33 belong to cell 11 served by base transceiving station 10 and terminals 34 and 35 belong to cell 13 being served by base transceiving station 12.

Furthermore the communication network 1 comprises a stationary telephone 36 and a computer 37 both being wirebound connected to the network via a gateway mobile switching centre 22.

### 1. Session Initiation

When a user of a GPRS mobile phone wishes to start 42 a communication session or, more precisely, a chat session according to the invention he creates 44 an initial member list. This user is the initiator to which initiator terminal 31 is assigned to.

The initial member list is a list of subscriber identification or telephone numbers of other chat session enabled GPRS mobile and fixed-line telephone users who will be invited to join the chat session. Selection 44 can be simplified by selecting entries from the telephone book of mobile phone 31. Once the member list comprises all chosen users assigned to mobile phones 32, 33, 34 and 35, stationary phone 36 and stationary computer 37 in this example, a GPRS session is activated. This gives the mobile phone 31 an internet protocol (IP) address. The initiator's IP-address can either be requested 46 at the network and transmitted via radio channel from base transceiving station 10 to the initiator terminal 31 or terminal 31 already has an IP-address.

Now initiator terminal 31 automatically sends 48 an SMS-message to each member of the initial member list. The initiators IP-address, his telephone number, a name for the chat session, a greeting and a nickname of the initiator are comprised by this initiation message.

### 2. Replying to an Invitation

When the invited user terminals 32, 33, 34, 35, 36, 37 receive 50 the initiation or invitation SMS-message his terminal provides a choice 52 to accept or reject the invitation by a respective input. If a user accepts the invitation, his terminal activates a GPRS session. Thus the respective terminal requests 54 an IP-address from the network, but can also already have one. When this user or his respective terminal has got or has its own IP-address an automatic reply to the invitation is sent 56 to the initiator 31. This reply is not an SMS-message but an internet protocol message sent via GPRS.

### 3. Initiator Receives an Invitation Reply

When the initiator 31 receives 58 a reply to the invitation SMS-message of the first one of the invited users, e.g. from terminal 32 this member is marked as active 60 by initiator terminal 31. Now the chat session is active 62.

When the initiator 31 receives a second reply, e.g. from mobile phone 33 the initiator's terminal 31 automatically updates 64 a list of all active members. This updated list includes the IP-addresses, the nicknames and the telephone numbers of each active member and is then automatically transmitted 66 by the initiators terminal 31 to each active member, also to the one who lastly replied.

### 4. An Active Chat Session

Once the session is active, any of the active members can send 68 a chat text. The chat text is packed into a chat message and sent to all other active members using a packet switched service, e.g. with internet protocol.

When a text message is received by another member, the text is extracted, prefixed with the senders nickname which can be recognized e.g. by the source IP-address and displayed.

The display of each terminal is divided into two portions and text to be transmitted is entered using e.g. the top half of the display. E.g. the lower half is used to display incoming text. When no own text to be sent is being displayed, the whole screen is used to display incoming text.

### 5. Leaving a Chat Session

If an active member wants to leave the chat session, a "LEAVE"-message is sent to the initiator. The initiators terminal 31 automatically removes this member from the active list and sends each remaining active member an updated list. This leaving member is now set to be inactive and is not sent any more chat messages for this session.

Preferably, the GPRS session of this member that left is now deactivated.

### 6. Re-entering a Chat Session

Should an inactive member wish to join or rejoin a still active chat session, he first activates a GPRS session if one is not still or already active. He then sends a "JOIN"-message comprising his IP-address to the initiator. The initiator can either accept or reject the join request. When the join request is rejected, the initiator sends a "JOIN REJECT"-message to the join requester which optionally comprises a text.

If the initiator accepts to join request, the joining member is set to the active state and an updated active member list is sent to all active members, also to the user who sent the join request. When the joining member receives the list, he knows that his request was accepted.

### 7. Joining an Active Chat Session

At any time during an active chat session the initiator can invite other users to join the session. For this purpose the initiator transmits a new invitation SMS-message. The joining process is then equivalent to the reply process as described in section 2.

### 8. The Initiator Leaves the Chat Session

Should the initiator wish to leave the chat session, he can chose between terminating the session or passing the initiator status to another active member.

If the chat session should be terminated 70 by the initiator 31 he sends a "TERMINATE"-message to all active members.

If the initiator wants to pass on the initiator status a message is sent to the chosen active member. If that chosen member accepts the initiator status the session remains active with the latter user's terminal acting as server.

## Claims

1. Method for providing a communication session with at least a first and second user of a communication system (1) comprising at least a first and second terminal (31, 32) assigned to the first and second user, respectively, the method comprising:
the first terminal (31) transmitting (48) an initiation message to the second terminal (32), the initiation message comprising a first address assigned to the first terminal (31), wherein said first address is a packet data protocol address,
the second terminal (32) receiving (50) the initiation message,
the second terminal (32) transmitting (56) a first reply to the initiation message and
the first terminal (31) receiving (58) the first reply,
**characterized in that**
said first address is either requested at a stationary part of the communication system or in case the first terminal already has an address, that address is used as said first address and
the initiation message comprising said first address being a packet data protocol address is transmitted (48) with a circuit switched service employing short message service (SMS).

2. Method according to claim 1, wherein
the first reply comprises a second address assigned to the second terminal (32).

3. Method according to claim 2, wherein
the second address is a packet data protocol address.

4. Method according to claim 2, wherein
the first and second address are Internet Protocol (IP) addresses.

5. Method according to one of the preceding claims, wherein the second terminal (32) requests (54) a second address at the communication system (1) before transmitting (56) the first reply.

6. Method according to one of the preceding claims, wherein the first reply is transmitted (56) with a packet switched service.

7. Method according to one of the preceding claims, wherein the first reply is transmitted (56) with General Packet Radio Service (GPRS).

8. Method according to one of the preceding claims, wherein the first reply is transmitted (56) using Internet Protocol (IP).

9. Method according to one of the preceding claims, wherein mobile stations, mobile phones (31, 32, 33, 34, 35) wirebound terminals, wirebound phones (36) or computers (37) are provided as the first or second terminal (31, 32).

10. Method according to one of the preceding claims, wherein the communication system (1) comprises a Global System for Mobile Communication (GSM) network or a Universal Mobile Telecommunication System (UMTS) network.

11. Method according to one of the preceding claims, wherein the session is activated (62) and the second terminal (32) is marked as active (60) by the first terminal (31) when the first reply is received (58) by the first terminal (31).

12. Method according to one of the preceding claims, wherein the first and second terminal (31, 32) enable the first and second user, respectively, to input (68) data and said data are exchanged (68) with a packet switched service at least between the first and second terminal (31, 32) after the first reply is received (58) by the first terminal (31).

13. Method according to one of the preceding claims, wherein the first terminal (31) acts as a server for the communication session.

14. Method according to one of the preceding claims for providing a communication session with at least the first terminal (31) and a group of terminals (32, 33, 34, 35, 36, 37) wherein the second terminal (32) is a member of said group and at least a third terminal (33) assigned to a third user is a member of said group, the method comprising:
the first terminal (31) transmitting (48) the initiation message to each member of the group,
at least the third terminal (33) receiving (50) the initiation message,
at least the third terminal (33) transmitting (56) a second reply to the initiation message and
the first terminal (31) receiving (58) the second reply.

15. Method according to claim 14 for providing a communication session with a plurality of users, wherein
the group of terminals comprises a plurality of member terminals (32, 33, 34, 35, 36, 37) each assigned to a respective user,
each member terminal (32, 33, 34, 35, 36, 37) receiving (50) the initiation message,
at least some of the member terminals are transmitting (56) a reply to the first terminal,
the first terminal (31) receiving (58) the replies and
the first terminal (31) marking (60) each terminal from which a reply is received (58) as being active.

16. Method according to claim 15, wherein
a list of active terminals of the communication session is defined (64), said list including all active terminals.

17. Method according to claim 16, wherein
the list of active terminals is transmitted (66) to each active terminal, in particular, with a packet switched service, after the first terminal (31) receiving (58) a reply of a member terminal.

18. Method according to claim 17, wherein each active terminal enables (68) the respective user to input data and said data are transmitted to each active terminal with a packet switched service.

19. Method according to one of the preceding claims, wherein a circuit switched message is transmitted with the first terminal (31) assigned to the first user of the communication system (1) to a plurality of users comprising at least the second and a third user, the method further comprising:
the first terminal (31) providing an input by the first user for the circuit switched message,
the first terminal (31) providing an input by the first user to define a group of users,
selecting (44) a subscriber number for each user of said plurality of users,
transmitting said message to each user of said plurality of users.

20. Method according to claim 19, wherein
at least some of the subscriber numbers are mobile subscriber numbers and are selected from a data base stored in the first terminal (31),
the first terminal (31) being a mobile station and
the message being transmitted with short message service (SMS).

21. Telecommunication terminal (31) for using with a communication system (1), and adapted to be used for the method according to one of the preceding claims, the terminal (31) comprising
means for transmitting an initiation message comprising an initiator address to other terminals (32, 33, 34, 35, 36, 37), wherein said first address is a packet data protocol address,
means for receiving an initiation message from other terminals,
means for storing an initiator address,
means for transmitting a reply message to another terminal and
means for receiving a reply message from other terminals,
**characterized in that** the telecommunication terminal comprises
means for either requesting said first address at a stationary part of the communication system or in case the first terminal already has an address, for using that address as said first address and
means for transmitting (48) the initiation message with a circuit switched service employing short message service (SMS).

22. Telecommunication terminal according to claim 21, comprising means for transmitting a reply comprising a reply address and means for storing a reply address,

23. Telecommunication terminal according to claim 21 or 22, comprising means for transmitting and storing a packet data protocol address.

24. Telecommunication terminal according to one of claims 21 to 23, comprising means for transmitting and storing an Internet Protocol (IP) address.

25. Telecommunication terminal according to one of claims 21 to 24, comprising means for requesting an address at the communication system (1).

26. Telecommunication terminal according to one of claims 21 to 25, comprising means for transmitting and receiving an initiation message with a circuit switched service.

27. Telecommunication terminal according to one of claims 21 to 26, comprising means for transmitting and receiving a reply with a packet switched service or with a packet data protocol addressed service.

28. Telecommunication terminal according to one of claims 21 to 27, comprising means for transmitting and receiving data with General Packet Radio Service (GPRS).

29. Telecommunication terminal according to one of claims 21 to 28, comprising means for Internet Protocol-based (IP) transmitting and receiving data.

30. Telecommunication terminal according to one of claims 21 to 29, comprising a mobile station, a mobile phone (31, 32, 33, 34, 35), a wirebound terminal, a wirebound phone (36) or a computer (37).

31. Telecommunication terminal according to one of claims 21 to 30, adapted to communicate with a telecommunication network according to Global System for Mobile Communication (GSM) or according to Universal Mobile Telecommunication System (UMTS).

32. Telecommunication terminal according to one of claims 21 to 31, comprising means for activating the communication session and assigning another terminal (32, 33, 34, 35, 36, 37) with an active status upon a reply message received by said another terminal.

33. Telecommunication terminal according to one of claims 21 to 32, comprising
means for handling a list of active terminals,
means for assigning each terminal from which a reply is received to the list of active terminals and
means for transmitting the list of active terminals to each active terminals with a packet data protocol addressed service.

34. Telecommunication network (1) providing packet data protocol addressed service, the network comprising
a plurality of telecommunication terminals (31) according to one of claims 21 to 33,
a plurality of base transceiving stations (10, 12),
a plurality of base station controllers (14),
at least a serving packet radio service support node (16).

35. Telecommunication network according to claim 34, comprising at least a gateway packet radio service support node (18, 20) for connecting said network (1) to another packet data network.

## Patentansprüche

1. Verfahren zum Bereitstellen einer Kommunikationssitzung mit zumindest einem ersten und einem zweiten Nutzer eines Kommunikationssystems (1), das zumindest ein erstes und ein zweites Endgerät (31, 32) umfasst, welche dem ersten bzw. dem zweiten Nutzer zugeordnet sind, wobei das Verfahren umfasst:
das erste Endgerät (31) übermittelt (48) eine Initiierungsnachricht an das zweite Endgerät (32), wobei die Initiierungsnachricht eine erste Adresse umfasst, die dem ersten Endgerät (31) zugeordnet ist, wobei die erste Adresse eine Paketdatenprotokoll-Adresse ist;
das zweite Endgerät (32) empfängt (50) die Initiierungsnachricht;
das zweite Endgerät (32) übermittelt (56) eine erste Antwort auf die Initiierungsnachricht; und
das erste Endgerät (31) empfängt (58) die erste Antwort;
**dadurch gekennzeichnet, dass**
die erste Adresse entweder an einem stationären Teil des Kommunikationssystems angefordert wird oder für den Fall, dass das erste Endgerät bereits eine Adresse besitzt, diese Adresse als die erste Adresse genutzt wird; und
die Initiierungsnachricht, welche die erste Adresse umfasst, die eine Paketdatenprotokoll-Adresse darstellt, mit einem Leitungsvermittlungsdienst übermittelt (48) wird, welcher SMS (Short Massage Service) nutzt.

2. Verfahren nach Anspruch 1,
bei welchem die erste Antwort eine zweite Adresse umfasst, die dem zweiten Endgerät (32) zugeordnet ist.

3. Verfahren nach Anspruch 2,
bei welchem die zweite Adresse eine Paketdatenprotokoll-Adresse darstellt.

4. Verfahren nach Anspruch 2,
bei welchem die erste und die zweite Adresse Internetprotokoll(IP)-Adressen darstellen.

5. Verfahren nach einem der vorhergehenden Ansprüche,
bei welchem das zweite Endgerät (32) eine zweite Adresse bei dem Kommunikationssystem (1) anfordert (54), bevor die erste Antwort übermittelt (56) wird.

6. Verfahren nach einem der vorhergehenden Ansprüche,
bei welchem die erste Antwort mit einem Paketvermittlungsdienst übermittelt (56) wird.

7. Verfahren nach einem der vorhergehenden Ansprüche,
bei welchem die erste Antwort mit GPRS (General Packet Radio Service; allgemeiner Paketfunkdienst) übermittelt (56) wird.

8. Verfahren nach einem der vorhergehenden Ansprüche,
bei welchem die erste Antwort mittels Internetprotokoll (IP) übermittelt (56) wird.

9. Verfahren nach einem der vorhergehenden Ansprüche,
bei welchem als das erste oder zweite Endgerät (31, 32) mobile Geräte, Mobiltelefone (31, 32, 33, 34, 35), drahtgebundene Endgeräte, drahtgebundene Telefone (36) oder Computer (37) vorgesehen sind.

10. Verfahren nach einem der vorhergehenden Ansprüche,
bei welchem das Kommunikationssystem (1) ein GSM-Netz (Global System for Mobile Communication; globales System für Mobilkommunikation) oder ein UMTS-Netz (Universal Mobile Telecommunication System; universelles Mobiltelekommunikationssystem) umfasst.

11. Verfahren nach einem der vorhergehenden Ansprüche,
bei welchem die Sitzung aktiviert (62) wird und das zweite Endgerät (32) durch das erste Endgerät (31) als aktiv markiert (60) wird, wenn die erste Antwort von dem ersten Endgerät (31) empfangen (58) wird.

12. Verfahren nach einem der vorhergehenden Ansprüche,
bei welchem das erste und das zweite Endgerät (31, 32) dem ersten bzw. dem zweiten Nutzer ermöglichen, Daten einzugeben (68) und diese Daten mit einem Paketvermittlungsdienst zumindest zwischen dem ersten und dem zweiten Endgerät (31, 32) ausgetauscht (68) werden, nachdem die erste Antwort von dem ersten Endgerät (31) empfangen (58) worden ist.

13. Verfahren nach einem der vorhergehenden Ansprüche,
bei welchem das erste Endgerät (31) als ein Server für die Kommunikationssitzung fungiert.

14. Verfahren nach einem der vorhergehenden Ansprüche zum Bereitstellen einer Kommunikationssitzung mit zumindest dem ersten Endgerät (31) und einer Gruppe von Endgeräten (32, 33, 34, 35, 36, 37), wobei das zweite Endgerät (32) ein Element der Gruppe ist und zumindest ein drittes Endgerät (33), das einem dritten Nutzer zugeordnet ist, ein Element der Gruppe ist, wobei das Verfahren umfasst:
das erste Endgerät (31) übermittelt (48) die Initiierungsnachricht an jedes Element der Gruppe;
zumindest das dritte Endgerät (33) empfängt (50) die Initiierungsnachricht;
zumindest das dritte Endgerät (33) übermittelt (56) eine zweite Antwort auf die Initiierungsnachricht; und
das erste Endgerät (31) empfängt (58) die zweite Antwort.

15. Verfahren nach Anspruch 14 zum Bereitstellen einer Kommunikationssitzung mit einer Mehrzahl von Nutzern, wobei
die Gruppe von Endgeräten eine Mehrzahl von Teilnehmerendgeräten (32, 33, 34, 35, 36, 37) umfasst, die jeweils einem jeweiligen Nutzer zugeordnet sind,
jedes Teilnehmerendgerät (32, 33, 34, 35, 36, 37) die Initiierungsnachricht empfängt (50);
zumindest einige der Teilnehmerendgeräte eine Antwort an das erste Endgerät übermitteln (56);
das erste Endgerät (31) die Antworten empfängt (58); und wobei
das erste Endgerät (31) jedes Endgerät, von welchem eine Antwort empfangen (58) wird, als aktiv markiert (60).

16. Verfahren nach Anspruch 15,
bei welchem eine Liste der aktiven Endgeräte der Kommunikationssitzung definiert (64) wird, wobei die Liste alle aktiven Endgeräte umfasst.

17. Verfahren nach Anspruch 16,
bei welchem die Liste der aktiven Endgeräte an jedes aktive Endgerät übermittelt (66) wird, insbesondere mit einem Paketvermittlungsdienst, nachdem das erste Endgerät (31) eine Antwort eines Teilnehmerendgerätes empfangen (58) hat.

18. Verfahren nach Anspruch 17,
bei welchem jedes aktive Endgerät dem jeweiligen Nutzer ermöglicht (68), Daten einzugeben, und bei welchem die Daten an jedes aktive Endgerät mit einem Paketvermittlungsdienst übermittelt werden.

19. Verfahren nach einem der vorhergehenden Ansprüche,
bei welchem eine leitungsvermittelte Nachricht mit dem ersten Endgerät (31), das dem ersten Nutzer des Kommunikationssystems (1) zugeordnet ist, an eine Mehrzahl von Nutzern übermittelt wird, welche zumindest den zweiten und einen dritten Nutzer umfasst, wobei das Verfahren ferner umfasst:
das erste Endgerät (31) ermöglicht eine Eingabe durch den ersten Nutzer für die leitungsvermittelte Nachricht;
das erste Endgerät (31) ermöglicht eine Eingabe durch den ersten Nutzer, um eine Gruppe von Nutzern zu definieren;
für jeden Nutzer der Mehrzahl von Nutzern wird eine Teilnehmernummer ausgewählt (44),
die Nachricht wird an jeden Nutzer der Mehrzahl von Nutzern übermittelt.

20. Verfahren nach Anspruch 19, bei welchem
zumindest einige der Teilnehmernummern Mobilfunkteilnehmernummern sind und aus einer Datenbank ausgewählt werden, die in dem ersten Endgerät (31) gespeichert ist,
das erste Endgerät (31) ein mobiles Gerät ist und
die Nachricht mittels SMS (Short Message Service) übermittelt wird.

21. Telekommunikationsendgerät (31) zur Nutzung mit einem Kommunikationssystem (1) und dafür ausgelegt, für das Verfahren gemäß einem der vorgehenden Ansprüche genutzt zu werden, wobei das Endgerät (31) umfasst:
Mittel zum Übermitteln einer Initiierungsnachricht, die eine Initiatoradresse umfasst, an andere Endgeräte (32, 33, 34, 35, 36, 37), wobei die erste Adresse eine Paketdatenprotokoll-Adresse ist;
Mittel zum Empfangen einer Initiierungsnachricht von anderen Endgeräten;
Mittel zum Speichern einer Initiatoradresse;
Mittel zum Übermitteln einer Antwortnachricht an ein anderes Endgerät; und
Mittel zum Empfangen einer Antwortnachricht von anderen Endgeräten;
**dadurch gekennzeichnet, dass**
das Telekommunikationsendgerät umfasst:
Mittel, um entweder die erste Adresse an einem stationären Teil des Kommunikationssystems anzufordern oder für den Fall, dass das erste Endgerät bereits eine Adresse besitzt, diese Adresse als die erste Adresse zu nutzen; und
Mittel, um die Initiierungsnachricht mit einem Leitungsvermittlungsdienst, welcher SMS (Short Message Service) nutzt, zu übermitteln (48).

22. Telekommunikationsendgerät nach Anspruch 21,
welches Mittel zum Übermitteln einer Antwort, die eine Antwortadresse umfasst, sowie Mittel zum Speichern einer Antwortadresse umfasst.

23. Telekommunikationsendgerät nach Anspruch 21 oder 22, welches Mittel zum Übermitteln und Speichern einer Paketdatenprotokoll-Adresse umfasst.

24. Telekommunikationsendgerät nach einem der Ansprüche 21 bis 23, welches Mittel zum Übermitteln und Speichern einer Internetprotokoll(IP)-Adresse umfasst.

25. Telekommunikationsendgerät nach einem der Ansprüche 21 bis 24, welches Mittel zum Anfordern einer Adresse bei dem Kommunikationssystem (1) umfasst.

26. Telekommunikationsendgerät nach einem der Ansprüche 21 bis 25, welches Mittel zum Übermitteln und Empfangen einer Initiierungsnachricht mit einem Leitungsvermittlungsdienst umfasst.

27. Telekommunikationsendgerät nach einem der Ansprüche 21 bis 26, welches Mittel zum Übermitteln und Empfangen einer Antwort mit einem Paketvermittlungsdienst oder mit einem mittels Paketdatenprotokoll adressierten Dienst umfasst.

28. Telekommunikationsendgerät nach einem der Ansprüche 21 bis 27, welches Mittel zum Übermitteln und Empfangen von Daten mit GPRS (General Packet Radio Service) umfasst.

29. Telekommunikationsendgerät nach einem der Ansprüche 21 bis 28, welches Mittel zum Übermitteln und Empfangen von Daten auf Basis des Internetprotokolls (IP) umfasst.

30. Telekommunikationsendgerät nach einem der Ansprüche 21 bis 29, welches ein mobiles Gerät, ein Mobiltelefon (31, 32, 33, 34, 35), ein drahtgebundenes Endgerät, ein drahtgebundenes Telefon (36) oder einen Computer (37) umfasst.

31. Telekommunikationsendgerät nach einem der Ansprüche 21 bis 30, welches dafür ausgelegt ist, mit einem Telekommunikationsnetz entsprechend GSM (Global System for Mobile Communication) oder entsprechend UMTS (Universal Mobile Telecommunication System) zu kommunizieren.

32. Telekommunikationsendgerät nach einem der Ansprüche 21 bis 31, welches Mittel zum Aktivieren der Kommunikationssitzung und zum Zuordnen eines aktiven Status für ein weiteres Endgerät (32, 33, 34, 35, 36, 37), wenn von dem weiteren Endgerät eine Antwortnachricht empfangen wird, umfasst.

33. Kommunikationsendgerät nach einem der Ansprüche 21 bis 32, umfassend:
Mittel zum Bearbeiten einer Liste aktiver Endgeräte;
Mittel zum Zuordnen jedes Endgeräts, von welchem eine Antwort empfangen wird, zu der Liste der aktiven Endgeräte; und
Mittel zum Übermitteln der Liste der aktiven Endgeräte an alle aktiven Endgeräte mit einem mittels Paketdatenprotokoll adressierten Dienst.

34. Telekommunikationsnetz (1), welches einen mittels Paketdatenprotokoll adressierten Dienst bereitstellt, wobei das Netz umfasst:
eine Mehrzahl von Telekommunikationsendgeräten (31) entsprechend einem der Ansprüche 21 bis 33;
eine Mehrzahl von sendenden/empfangenden Basisstationen (10, 12);
eine Mehrzahl von Basisstationscontrollern (14);
zumindest einen im Dienst befindlichen Paketfunkdienst-Unterstützungsknoten (16).

35. Telekommunikationsnetz nach Anspruch 34,
welches zumindest einen Gateway-Paketfunkdienst-Unterstützungsknoten (18, 20) zum Verbinden des Netzwerks (1) mit einem weiteren Paketdatennetz umfasst.

## Revendications

1. Procédé destiné à fournir une session de communication, avec au moins un premier et un deuxième utilisateur d'un système de communication (1) comprenant au moins un premier et un deuxième terminal (31, 32) attribués au premier et au deuxième utilisateur, respectivement, le procédé comprenant :
l'émission (48) par le premier terminal (31) d'un message d'initiation vers le deuxième terminal (32), le message d'initiation comprenant une première adresse attribuée au premier terminal (31), ladite première adresse étant une adresse d'un protocole de données en paquets,
la réception (50) du message d'initiation par le deuxième terminal (32),
l'émission (56) d'une première réponse au message d'initiation par le deuxième terminal (32) et
la réception (58) de la première réponse par le premier terminal (31),
**caractérisé en ce que**
ladite première adresse soit est demandée auprès d'une partie stationnaire du système de communication ou bien, dans le cas où le premier terminal possède déjà une adresse, cette adresse est utilisée comme ladite première adresse et
le message d'initiation comprenant ladite première adresse qui est une adresse d'un protocole de données en paquets est émis (48) à l'aide d'un service à commutation de circuits utilisant un service de messages courts (SMS).

2. Procédé selon la revendication 1, dans lequel la première réponse comprend une deuxième adresse attribuée au deuxième terminal (32).

3. Procédé selon la revendication 2, dans lequel la deuxième adresse est une adresse d'un protocole de données en paquets.

4. Procédé selon la revendication 2, dans lequel les première et deuxième adresses sont des adresses du protocole internet (IP).

5. Procédé selon l'une des revendications précédentes, dans lequel le deuxième terminal (32) demande (54) une deuxième adresse au système de communication (1) avant d'émettre (56) la première réponse.

6. Procédé selon l'une des revendications précédentes, dans lequel la première réponse est émise (56) à l'aide d'un service à commutation de paquets.

7. Procédé selon l'une des revendications précédentes, dans lequel la première réponse est émise (56) à l'aide du Service Général de Radiocommunication par Paquets (GPRS, pour « *General Packet Radio Service* »).

8. Procédé selon l'une des revendications précédentes, dans lequel la première réponse est émise (56) en utilisant le protocole internet (IP).

9. Procédé selon l'une des revendications précédentes, dans lequel des stations mobiles, des téléphones mobiles (31, 32, 33, 34, 35), des terminaux filaires, des téléphones filaires (36) ou des ordinateurs (37) sont fournis comme premier ou comme deuxième terminal (31, 32).

10. Procédé selon l'une des revendications précédentes, dans lequel le système de communication (1) est constitué d'un réseau GSM (pour « *Global System for Mobile communication » -* Système mondial de communication mobile) ou d'un réseau UMTS (pour *« Universal Mobile Telecommunication System » -* Système universel de télécommunication mobile).

11. Procédé selon l'une des revendications précédentes, dans lequel la session est activée (62) et le deuxième terminal (32) est marqué comme actif (60) par le premier terminal (31) lorsque la première réponse est reçue (58) par le premier terminal (31).

12. Procédé selon l'une des revendications précédentes, dans lequel les premier et deuxième terminaux (31, 32) autorisent les premier et deuxième utilisateurs, respectivement, à saisir (68) des données et dans lequel lesdites données sont échangées (68) à l'aide d'un service à commutation de paquets, au moins entre les premier et deuxième terminaux (31, 32), après que la première réponse a été reçue (58) par le premier terminal (31).

13. Procédé selon l'une des revendications précédentes, dans lequel le premier terminal (31) joue le rôle de serveur pour la session de communication.

14. Procédé selon l'une des revendications précédentes, destiné à fournir une session de communication, avec au moins le premier terminal (31) et un groupe de terminaux (32, 33, 34, 35, 36, 37), dans lequel le deuxième terminal (32) fait partie dudit groupe et au moins un troisième terminal (33) attribué à un troisième utilisateur fait partie dudit groupe, le procédé comprenant :
l'émission (48) par le premier terminal (31) d'un message d'initiation vers chacun des membres du groupe,
la réception (50) du message d'initiation par au moins le troisième terminal (33),
l'émission (56) d'une deuxième réponse au message d'initiation par au moins le troisième terminal (33) et
la réception (58) de la deuxième réponse par le premier terminal (31).

15. Procédé selon la revendication 14, destiné à fournir une session de communication avec une pluralité d'utilisateurs, dans lequel :
le groupe de terminaux comprend une pluralité de terminaux membres (32, 33, 34, 35, 36, 37), chacun étant attribué à un utilisateur respectif ;
chaque terminal membre (32, 33, 34, 35, 36, 37) reçoit (56) le message d'initiation ;
au moins certains des terminaux membres émettent (56) une réponse au premier terminal ;
le premier terminal (31) reçoit (58) les réponses ; et
le premier terminal (31) marque (60) comme actifs chacun des terminaux dont une réponse a été reçue (58).

16. Procédé selon la revendication 15, dans lequel une liste de terminaux actifs de la session de communication est définie (64), ladite liste incluant tous les terminaux actifs.

17. Procédé selon la revendication 16, dans lequel la liste des terminaux actifs est émise (66) vers chaque terminal actif, en particulier, à l'aide d'un service à commutation de paquets, après que le premier terminal (31) a reçu (58) une réponse d'un terminal membre.

18. Procédé selon la revendication 17, dans lequel chaque terminal actif autorise (68) l'utilisateur respectif à saisir des données et dans lequel lesdites données sont émises vers chacun des terminaux actifs à l'aide d'un service à commutation de paquets.

19. Procédé selon l'une des revendications précédentes, dans lequel un message est émis par commutation de circuits par le premier terminal (31), attribué au premier utilisateur du système de communication (1) vers une pluralité d'utilisateurs comprenant au moins le deuxième et un troisième utilisateur, le procédé comprenant en outre :
la fourniture par le premier terminal (31) d'une saisie par le premier utilisateur pour le message émis par commutation de circuits ;
la fourniture par le premier terminal (31) d'une saisie par le premier utilisateur pour définir un groupe d'utilisateurs ;
la sélection (44) d'un numéro d'abonné pour chaque utilisateur dans ladite pluralité d'utilisateurs ;
l'émission dudit message vers chaque utilisateur dans ladite pluralité d'utilisateurs.

20. Procédé selon la revendication 19, dans lequel :
au moins certains des numéros d'abonnés sont des numéros d'abonnés mobiles et sont sélectionnés dans une base de données stockée dans le premier terminal (31) ;
le premier terminal (31) est une station mobile ; et
le message étant émis à l'aide du service de messages courts (SMS).

21. Terminal de télécommunications (31) destiné à être utilisé avec un système de communication (1) et conçu pour être utilisé dans le procédé selon l'une des revendications précédentes, le terminal (31) comprenant :
un moyen destiné à émettre un message d'initiation comprenant une adresse de l'initiateur vers d'autres terminaux (32, 33, 34, 35, 36, 37), ladite première adresse étant une adresse d'un protocole de données en paquets,
un moyen destiné à recevoir un message d'initiation d'autres terminaux,
un moyen destiné à stocker une adresse d'initiateur,
un moyen destiné à envoyer un message de réponse à un autre terminal et
un moyen destiné à recevoir un message de réponse d'autres terminaux,
**caractérisé en ce que** le terminal de télécommunications comprend
un moyen destinés soit à demander ladite première adresse auprès d'une partie stationnaire du système de communication, soit dans le cas où le premier terminal possède déjà une adresse, à utiliser cette adresse comme ladite première adresse et
un moyen destiné à émettre (48) le message d'initiation à l'aide d'un service à commutation de circuits utilisant un service de messages courts (SMS).

22. Terminal de télécommunications selon la revendication 21, comprenant un moyen destiné à émettre une réponse comprenant une adresse de réponse et un moyen destiné à stocker une adresse de réponse.

23. Terminal de télécommunications selon la revendication 21 ou 22, comprenant un moyen destiné à émettre et stocker une adresse de protocole de données en paquets.

24. Terminal de télécommunications selon l'une des revendications 21 à 23, comprenant un moyen destiné à émettre et stocker une adresse du protocole internet (IP).

25. Terminal de télécommunications selon l'une des revendications 21 à 24, comprenant un moyen destiné à demander une adresse auprès du système de communication (1).

26. Terminal de télécommunications selon l'une des revendications 21 à 25, comprenant un moyen destiné à émettre et recevoir un message d'initiation à l'aide d'un service à commutation de circuits.

27. Terminal de télécommunications selon l'une des revendications 21 à 26, comprenant un moyen destiné. à émettre et recevoir une réponse à l'aide d'un service à commutation de paquets ou à l'aide d'un service avec adressage par un protocole de données en paquets.

28. Terminal de télécommunications selon l'une des revendications 21 à 27, comprenant un moyen destiné à émettre et recevoir des données à l'aide du Service Général de Radiocommunication par Paquets (GPRS).

29. Terminal de télécommunications selon l'une des revendications 21 à 28, comprenant un moyen destiné à émettre et recevoir des données en se fondant sur le protocole internet (IP).

30. Terminal de télécommunications selon l'une des revendications 21 à 29, comprenant une station mobile, un téléphone mobile (31, 32, 33, 34, 35), un terminal filaire, un téléphone filaire (36) ou un ordinateur (37).

31. Terminal de télécommunications selon l'une des revendications 21 à 30, conçu pour communiquer avec un réseau de télécommunications selon la norme GSM ou selon la norme UMTS.

32. Terminal de télécommunications selon l'une des revendications 21 à 31, comprenant un moyen destiné à activer la session de communication et à attribuer à un autre terminal (32, 33, 34, 35, 36, 37) un état actif après réception d'un message de réponse par ledit autre terminal.

33. Terminal de télécommunications selon l'une des revendications 21 à 32, comprenant :
un moyen destiné à gérer une liste de terminaux actifs ;
un moyen destiné à inscrire chacun des terminaux dont une réponse a été reçue dans la liste des terminaux actifs ; et
un moyen destiné à émettre la liste des terminaux actifs vers chacun des terminaux actifs, à l'aide d'un service avec adressage par un protocole de données en paquets.

34. Réseau de télécommunications (1) fournissant un service avec adressage par un protocole de données en paquets, le réseau comprenant :
une pluralité de terminaux de télécommunications (31) selon l'une des revendications 21 à 33 ;
une pluralité de stations émettrices-réceptrices de base (10, 12) ;
une pluralité de contrôleurs de stations de base (14) ;
au moins un noeud de support de service de radiocommunication par paquets de desserte (16).

35. Réseau de télécommunications selon la revendication 34, comprenant au moins un noeud de support de service de radiocommunication par paquets faisant fonction de passerelle (18, 20), afin de connecter ledit réseau (1) à un autre réseau de données en paquets.
